**Europäisches Patentamt**

(19) **European Patent Office**

**Office européen des brevets**

(11) Numéro de publication: **0 103 520**
**B1**

(12) **FASCICULE DE BREVET EUROPEEN**

(45) Date de publication du fascicule du brevet:
13.11.85

(51) Int. Cl.⁴: **H 02 J 13/00**

(21) Numéro de dépôt: 83401768.3

(22) Date de dépôt: 09.09.83

(54) Circuit d'entrée et d'alimentation pour filtre, notamment un filtre de récepteur de télécommande centralisée.

(30) Priorité: 13.09.82 FR 8215462

(43) Date de publication de la demande:
21.03.84 Bulletin 84/12

(45) Mention de la délivrance du brevet:
13.11.85 Bulletin 85/46

(84) Etats contractants désignés:
CH DE LI

(56) Documents cités:
FR - A - 2 334 226
US - A - 4 055 812

(73) Titulaire: **ENERTEC, 12 Place des Etats Unis,
F-92120 Montrouge (FR)**

(72) Inventeur: **Leydier, Robert, La Bastide Quartier Pichots,
F-83250 La Londe Les Maures (FR)**

(74) Mandataire: **Bentz, Jean-Paul, GIERS SCHLUMBERGER
Service BREVETS 12, place des Etats-Unis,
F-92124 Montrouge Cedex (FR)**

## Description

La présente invention concerne un circuit d'entrée et d'alimentation pour filtre, notamment pour filtre de récepteur de télécommande centralisée.

Les récepteurs de télécommande centralisée branchés sur un réseau de distribution d'énergie électrique reçoivent un signal de commande constitué par un signal superposé à la tension alternative du réseau. Ils comprennent un filtre destiné à extraire le signal utile de la tension du réseau et sont alimentés par prélèvement d'énergie sur le réseau.

La présente invention a pour objet un circuit d'entrée et d'alimentation apte à fournir à un tel filtre le signal à filtrer et une tension continue d'alimentation sans altérer le spectre de fréquences du signal reçu dans le domaine utile, c'est-à-dire dans le domaine de fréquences où se situe le signal de commande.

A cet effet, l'invention a plus particulièrement pour objet un circuit d'entrée et d'alimentation du type comportant:

- une première et une seconde borne d'entrée recevant un signal alternatif d'entrée à filtrer dont l'énergie est partiellement utilisée pour alimenter le filtre,
- un circuit de redressement ayant deux bornes primaires reliées aux bornes d'entrée et deux bornes secondaires de courant redressé reliées respectivement à une première et une seconde borne d'alimentation du filtre, et
- un circuit de prélèvement relié aux bornes d'entrée et à une première et une seconde borne d'injection du filtre pour fournir à celui-ci un signal à filtrer ayant les mêmes caractéristiques spectrales utiles que le signal d'entrée, le circuit de prélèvement comprenant une liaison électrique entre la première borne d'entrée et la première borne d'injection du filtre et un régulateur de tension branché aux bornes secondaires du circuit de redressement et fournissant une tension stable entre les secondes bornes d'alimentation et d'injection du filtre.

Dans la demande de brevet FR-A-2 334 226, des circuits d'entrée et d'alimentation de ce type sont décrits dans lesquels des moyens sont prévus pour superposer au signal amené par la liaison électrique sur la première borne d'injection du filtre, un signal destiné à compenser les signaux parasites introduits par les non-linéarités du circuit de redressement. Dans un de ces circuits connus, des condensateurs sont introduits entre le raccordement continu et le raccordement au réseau afin d'établir un trajet linéaire dans le domaine utile. Il est alors nécessaire que le domaine utile soit suffisamment élevé en fréquence par rapport à la fréquence du réseau. Dans un autre de ces circuits connus, une liaison est prévue entre la seconde borne d'entrée et une borne d'entrée supplémentaire du filtre, mais la compensation n'est pas optimale surtout si l'on s'écarte de la fréquence d'accord du filtre. Enfin, dans encore un autre de ces circuits connus, la tension de compensation est prélevée au moyen d'un transformateur. On peut certes alors obtenir une compensation optimale, mais la présence du transformateur augmente le coût et l'encombrement du circuit.

La présente invention a pour but de fournir un circuit d'entrée et d'alimentation pour filtre grâce auquel le signal injecté à l'entrée du filtre est, au moins dans le domaine utile, l'image fidèle de la tension entre les bornes d'entrée du circuit, et ce à faible coût et à faible encombrement.

Ce but est atteint du fait que, conformément à l'invention, le circuit de prélèvement comprend un miroir de courant connecté à la liaison électrique reliant la première borne d'entrée à la première borne d'injection, à la seconde borne d'entrée et à la seconde borne d'alimentation du filtre pour dériver de ladite liaison électrique un courant dont la composante alternative est égale à celle du courant circulant entre la seconde borne d'entrée et la seconde borne d'alimentation du filtre.

Grâce à ce montage, on peut injecter sur la première borne d'injection du filtre un courant dont la composante alternative est proportionnelle à la différence de tension entre les bornes d'entrée du circuit. On réalise donc, sans nécessiter d'amplificateur différentiel, un prélèvement de type différentiel en amont des non-linéarités introduites par le circuit de redressement. De plus, un miroir de courant est un élément de circuit qui peut être très peu emcombrant et très peu coûteux et se présenter par exemple sous forme d'un circuit intégré. De plus encore, le miroir de courant peut travailler sans perte de précision dans une large bande de fréquences, ce qui constitue encore un avantage suplémentaire par rapport à l'utilisation d'un transformateur de potentiel.

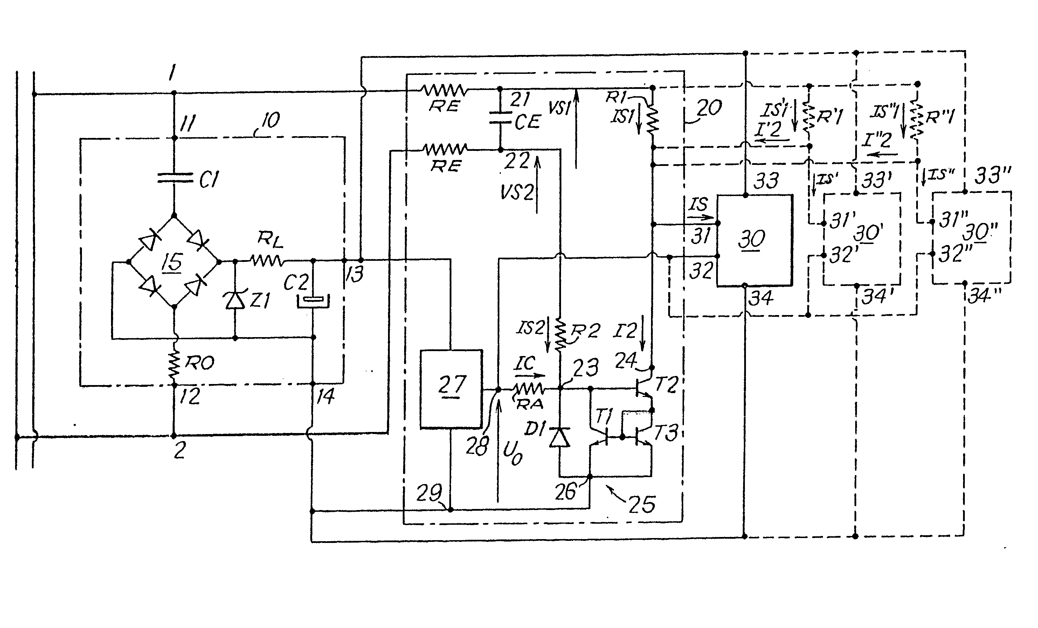

L'invention sera mieux comprise à la lecture de la description faite ci-après, à titre indicatif mais non limitatif, en référence au dessin annexé dont la figure unique est un schéma d'un mode de réalisation d'un circuit d'entrée et d'alimentation conforme à l'invention.

Le circuit illustré comporte deux bornes d'entrée 1, 2 raccordées à deux conducteurs d'un réseau alternatif de distribution d'énergie électrique, un circuit de redressement 10 relié aux bornes 1, 2 et destiné à fournir une tension d'alimentation continue à un filtre 30, et un circuit de prélèvement 20 relié aux bornes 1, 2 et destiné à fournir au filtre 30 le signal sur lequel le filtrage doit être effectué.

Le circuit de redressement 10 a deux bornes primaires 11, 12 reliées respectivement aux bornes d'entrée 1, 2 et deux bornes secondaires 13, 14 reliées respectivement à deux bornes d'alimentation 33, 34 du filtre 30. De façon classique, le circuit 10 comprend un redresseur 15, par exemple un redresseur double alternance formé par un pont de diodes. Deux sommets opposés du pont sont branchés entre les bornes 11, 12 en série avec un condensateur C1 destiné à faire chuter la tension et une résistance R0 de protection contre les ondes de choc électriques. Les deux autres sommets du pont sont reliés aux bornes d'une diode Zener Z1 ainsi qu'aux bornes d'un condensateur électrochimique C2. Une résistance $R_L$ peut être insérée entre le pont et le condensateur C2 pour limiter le courant de charge de ce dernier en cas de brusque variation de tension provoquée par une onde de choc. La tension continue redressée est disponible aux bornes du condensateur C2 reliées aux bornes secondaires de courant redressé 13, 14.

Le circuit de prélèvement 20 comprend, en entrée, un circuit d'atténuation des signaux parasites ayant deux bornes 21, 22 entre lesquelles est branché un condensateur CE et qui sont reliées aux bornes d'entrée 1, 2 par des résistances d'entrée identiques RE dimensionnées pour supporter les ondes de choc. La borne 21 est reliée par une résistance R1 à une première borne d'injection 31 du filtre 30 tandis que la borne 22 est reliée par une résistance R2 à une borne d'entrée 23 d'un miroir de courant 25. Un régulateur de tension 27 est branché entre les bornes secondaires 13, 14 du circuit 10 et délivre une tension régulée $U_0$ entre une borne 28 reliée à une seconde borne d'injection 32 du filtre 30 et une borne 29 commune aux bornes 14 et 34. La borne 28 est par ailleurs reliée par une résistance RA à l'entrée 23 du miroir de courant 25 pour polariser ce dernier en continu. Le miroir de courant a une borne de sortie 24 reliée à la résistance R1 du côté de celle-ci connecté à la borne d'injection 31. Les miroir de courant 25 maintient égaux les courants sur son entrée 23 et sa sortie 24. Il peut être de tout type connu tel que, par exemple un miroir de courant de type Wilson formé par un transistor T1 dont le trajet collecteur-émetteur est branché entre l'entrée 23 et une borne commune 26 et deux transistors T2, T3 dont les trajets émetteur-collecteur sont branchés en série entre la sortie 24 et la borne commune 26. Les bases des transistors T1 et T3 sont connectées ensemble et à l'émetteur du transistor T2 tandis que la base du transistor T2 est connectée à l'entrée 23. Une diode D1 est branchée entre l'entrée 23 et la borne commune 26, cette dernière étant connectée à la borne 14.

Le filtre 30 forme un premier étage d'un récepteur de télécommande qui peut être de tout type classique connu. Les éléments du récepteur autres que le filtre ne sont pas représentés. Ils sont alimentés également par la tension redressée disponible entre les bornes 13 et 14 du circuit de redressement.

Le fonctionnement du circuit de prélèvement est le suivant. Si l'on désigne par IS1, IS2 et IC les courants traversant les résistances R1, R2 et RA, par IS le courant injecté à la borne 31 du filtre 30, et par I2 le courant prélevé par le miroir de courant 25 sur la sortie 24, on a:

$$IS = IS1 - I2, \text{ et}$$
$$I2 = IS2 + IC \text{ (égalité des courants sur l'entrée et la sortie du miroir de courant).}$$

$$\text{Or, IC} = \frac{U_0 - (Vbe2 + Vbe1,3)}{RA}, Vbe2$$

étant la tension base émetteur de T2 et Vbe1,3 celle de T1 ou T3. Comme $U_0$ est une tension régulée, la composante alternative de IC est nulle et le courant I2 a une composante alternative égale à celle du courant IS2 circulant de la borne 2 vers la borne 14. Si l'on désigne par VS1 et VS2 les tensions aux bornes 21 et 22 et si R1 = R2 = R, le courant injecté à l'entrée 31 du filtre 30 a une composante alternative égale à $\frac{VS1 - VS2}{R}$. On réalise ainsi un prélèvement différentiel sans utiliser d'amplificateur différentiel et sans altérer le spectre de fréquences dans le domaine utile, la prise de signal se faisant en amont des non-linéarités introduites par le circuit de redressement 10. Une protection contre les ondes de choc est par ailleurs assurée, dans un sens par la diode D1 et, dans l'autre sens par les diodes formées par les jonctions base-émetteur des transistors T2 et T3.

Les résistances RE permettent une compensation des parasites en mode commun véhiculés sur le réseau tandis que le condensateur CE permet d'éliminer des parasites en mode différentiel en réalisant une fonction de filtre passe-bas de fréquence de coupure bien entendu supérieure à la limite haute du domaine utile.

Le miroir de courant 25 constitue, dans l'exemple décrit plus haut, un transformateur de courant de raport 1 : 1.

En variante, l'utilisateur d'un transformateur de courant de rapport n : 1, n étant un nombre entier supérieur à 1 permet de réaliser un circuit d'entrée et d'alimentation pour filtres de récepteur multifréquence. Dans ce cas, comme illustré en tirets sur le dessin, des filtres supplémentaires 30', 30'' peuvent être prévus avec leurs premières bornes d'alimentation 33', 33'' reliées à la borne 13 et leurs secondes bornes d'alimentation 34', 34'' reliées à la borne 14 et leurs secondes bornes d'injection reliées à la sortie du régulateur de tension 27. Les premières bornes d'injection 31', 31'' des filtres 30', 30'' sont reliées à la borne 21 par des résistances respectives R'1, R''1 égales à R1, ces résistances R'1, R''1 étant, comme R1, reliées à la sortie du miroir de courant 25, ce dernier formant alors transformateur de courant de rapport 3 : 1. De cette manière, on prélève des courants IS1, IS'1 et IS''1 traversant les résistances R1, R'1 et R''1 des courants I2, I'2 et I''2 égaux tels que les courants IS, IS' et IS'' injectés sur les bornes 31, 31' et 31'' sont tous proportionnels à VS1 - VS2 dans le domaine utile.

## Revendications

1. Circuit d'entrée et d'alimentation pour filtre, notamment pour filtre (30) de récepteur de télécommande centralisée, comportant:

— une première et une seconde borne d'entrée (1, 2) recevant un signal alternatif d'entrée à filtrer dont l'énergie est partiellement utilisée pour alimenter le filtre (30),
— un circuit de redressement (10) ayant deux bornes primaires (11, 12) reliées aux bornes d'entrée (1, 2) et deux bornes secondaires (13, 14) de courant redressé reliées respectivement à une première (33) et une seconde (34) borne d'alimentation du filtre (30), et
— un circuit de prélèvement (20) relié aux bornes d'entrée (1, 2) et à une première (31) et une seconde (32) borne d'injection du filtre (30) pour fournir à celui-ci un signal à filtrer ayant les mêmes caractéristiques spectrales utiles que le signal d'entrée, le circuit de prélèvement comprenant une liaison électrique entre la première borne d'entrée (1) et la première borne d'injection (31) du filtre (30) et un régulateur de tension (27) branché aux bornes secondaires (13, 14) du circuit de redressement (10) et fornissant une tension stable ($U_0$) entre les secondes bornes d'alimentation (34) et d'injection (32) du filtre (30),

circuit caractérisé en ce que le circuit de prélèvement (20) comprend un miroir de courant (25) connecté à la liaison électrique reliant la première borne d'entrée (1) à la première borne d'injection (31), à la seconde borne d'entrée (2) et à la seconde borne d'alimentation (34) du filtre pour dériver de ladite liaison électrique un cou-rant (I2) dont la composante alternative est égale à celle du courant (IS2) circulant entre la seconde borne d'entrée (2) et la seconde borne d'alimentation (34) du filtre (30).

2. Circuit selon la revendication 1, caractérisé en ce que les liaisons électriques entre la première borne d'entrée (1) et la première borne d'injection (31) du filtre (30), et entre la seconde borne d'entrée (2) et le miroir de courant (25) sont identiques.

3. Circuit selon l'une quelconque des revendications 1 et 2, caractérisé en ce que le miroir de courant (25) est relié au régulateur de tension (27) par une liaison (RA) de polarisation en continu.

4. Circuit selon l'une quelconque des revendications 1 à 3, caractérisé en ce qu'un circuit (RE, RE, CE) d'affaiblissement des parasites véhiculés par le réseau est branché entre lesdites bornes d'entrée (1, 2) à l'entrée du circuit de prélèvement (20).

5. Circuit selon l'une quelconque des revendications 1 à 4, pour filtres de récepteur multifré-quences, caractérisé en ce que chaque filtre (30, 30', 30") a: une première (33, 33', 33") et une seconde (34, 34', 34") borne d'alimentation reliées respectivement aux bornes secondaires (13, 14) du circuit de redressement, une première borne d'injection (31, 31', 31") reliée à la première borne d'entrée (1) par une liaison électrique particulière et une seconde borne d'injection (32, 32', 32") reliée à la sortie du régulateur de tension (27), et en ce que le miroir de courant est connecté à chacune desdites liaisons électriques (R1, R'1, R"1) pour en dériver un courant dont la composante alternative est égale à celle du courant circulant entre la seconde borne d'entrée et les secondes bornes communes d'alimentation (34, 34', 34") des filtres (30, 30', 30").

## Patentansprüche

1. Eingangs- und Speiseschaltung für Filter, insbesondere für Rundsteuerempfänger-Filter (30), enthaltend:

— eine erste und eine zweite Eingangsklemme (1, 2) zum Empfang eines zu filternden Wechselstromeingangssignals, dessen Energie teilweise zur Speisung des Filters (30) verwendet wird,
— eine Gleichrichter-Schaltung (10) mit zwei Primärklemmen (11, 12), die mit den Eingangsklemmen (1, 2) verbunden sind, sowie mit zwei Sekundärklemmen (13, 14) für den gleichgerichteten Strom, die mit einer ersten Klemme (33) bzw. mit einer zweiten Klemme (34) zur Speisung des Filters (30) verbunden sind, sowie
— eine Entnahmeschaltung (20), die mit den Eingangsklemmen (1, 2) sowie mit einer ersten (31) und einer zweiten (32) Einspeisungsklemme des Filters (30) verbunden ist, zur Abgabe eines zu filternden Signals an dieses Filter mit denselben spektralen Nutzcharakteristiken wie das Eingangssignal, wobei die Entnahmeschaltung eine elektrische Verbindung zwischen der ersten Eingangsklemme (1) und der ersten Einspeisungsklemme (31) des Filters (30) sowie einen an den Sekundärklemmen (13, 14) der Gleichrichterschaltung (10) angeschlossenen Spannungsregler (27) umfaßt, der eine stabile Spannung ($U_0$) zwischen den zweiten Speise- und Einspeisungsklemmen (32 bzw. 34) des Filters (30) liefert,

wobei die Schaltung dadurch gekennzeichnet ist, daß die Entnahmeschaltung (20) einen Stromspiegel (25) enthält, der an die elektrische Verbindung zwischen der ersten Eingangsklemme (1) einerseits und der ersten Einspeisungsklemme (31), der zweiten Eingangsklemme (2) und der zweiten Speiseklemme (34) des Filters andererseits angeschlossen ist, um von der genannten elektrischen Verbindung einen Strom I2 abzuleiten, dessen Wechselkomponente der Komponente des zwischen der zweiten Eingangsklemme (2) und der zweiten Speiseklemme (34) des Filters (30) fließenden Stromes (IS2) gleich ist.

2. Schaltung gemäß Anspruch 1, dadurch gekennzeichnet, daß die elektrischen Verbindungen zwischen der ersten Eingangsklemme (1) und der ersten Einspeisungsklemme (31) des Filters (30) sowie zwischen der zweiten Eingangsklemme (2) und dem Stromspiegel (25) identisch sind.

3. Schaltung gemäß irgendeinem der Ansprüche 1 und 2, dadurch gekennzeichnet, daß der Stromspiegel (25) an dem Spannungsregler (27) über eine Gleichstrom-Polarisationsverbindung (RA) angeschlossen ist.

4. Schaltung gemäß irgendeinem der Ansprüche 1 bis 3, dadurch gekennzeichnet, daß eine Schaltung (RE, RE, CE) zur Dämpfung der vom Netz her übermittelten Störungen zwischen den genannten Eingangsklemmen (1, 2) am Ende der Entnahmeschaltung (20) angeschlossen ist.

5. Schaltung gemäß irgendeinem der Ansprüche 1 bis 4 für Mehrfrequenzempfangsfilter, dadurch gekennzeichnet, daß jedes Filter (30, 30', 30") aufweist: eine erste (33, 33', 33") und eine zweite (34, 34', 34") Speiseklemme, die jeweils an den Sekundärklemmen (13, 14) der Gleichrichterschaltung angeschlossen sind, eine erste Einspeisungsklemme (31, 31', 31"), die mit der ersten Eingangsklemme (1) durch eine elektrische Sonderverbindung verbunden ist, und eine zweite Einspeisungsklemme (32, 32', 32"), die am Ausgang des Spannungsreglers (27) angeschlossen ist; und daß der Stromspiegel mit jeder einzelnen der genannten elektrischen Verbindungen (R1, R'1, R"1) verbunden ist, um davon einen Strom abzuleiten, dessen Wechselkomponente gleich derjenigen des zwischen der zweiten Eingangsklemme und den zweiten gemeinsamen Speiseklemmen (34, 34', 34") der Filter (30, 30', 30") fließenden Stromes ist.

## Claims

1. An input and supply circuit for a filter, specifically for a centralized remote control receiver, comprising:

- a first and a second input terminals (1, 2) receiving an input a.c. signal to be filtered, the energy of which is partially used for supplying the filter (30),
- a rectifier circuit (10) having two primary terminals (11, 12) connected to the input terminals (1, 2) and two secondary terminals (13, 14) for the rectified current which are connected to a first (33) and a second (34) supply terminals of the filter (30), respectively, and
- a sampling circuit (20) connected to the input terminals (1, 2) and to a first (31) and a second (32) injection terminals of the filter (30) to provide the latter with a signal to be filtered having the same useful spectral characteristics as the input signal, wherein the sampling circuit comprises an electrical link between the first input terminal (1) and the first injection terminal (31) of the filter (30) and a voltage regulator (27) connected to the secondary terminals (13, 14) of the rectifier circuit (10) and providing a stable voltage ($U_0$) between the second supply (34) and injection (32) terminals of the filter (30),

which circuit is characterized in that the sampling circuit (20) comprises a current mirror (25) connected to the electrical link joining the first input terminal (1) with the first injection terminal (31), to the second input terminal (2) and to the second supply terminal (34) of the filter (30) in order to derive from said electrical link a current (12) the a.c. component of which is equal to that of the current (IS2) flowing across the second input terminal (2) and the second supply terminal (34) of the filter (30).

2. A circuit according to claim 1, characterized in that the electrical links between the first input terminal (1) and the first injection terminal (31) of the filter (30), and between the second input terminal (2) and the current mirror (25) are identical.

3. A circuit according to any of claims 1 and 2, characterized in that the current mirror (25) is connected to the voltage regulator (27) through a link (RA) which is continuously biased.

4. A circuit according to any of claims 1 to 3, characterized in that a circuit (RE, RE, CE) for reducing the spurious signals propagated by the network is connected across said input terminals (1, 2) at the input of the sampling circuit (29).

5. A circuit according to any of claims 1 to 4, for multi-frequency receiver filters, characterized in that each filter (30, 30', 30") has: a first (33, 33', 33") and a second (34, 34', 34") supply terminals connected respectively to the secondary terminals (13, 14) of the rectifier circuit, a first injection terminal (31, 31', 31") connected to the first input terminal (1) through a specific electrical link and a second injection terminal (32, 32', 32") connected to the output of the voltage rectifier (27), and in that the current mirror is connected to each of said electrical links (R1', R'1, R"1) in order to derive therefrom a current the a.c. component of which is equal to that of the current flowing across the second input terminal and the second common supply terminals (34, 34', 34") of the filters (30, 30', 30").